# EUROPEAN PATENT APPLICATION

(11) **EP 4 696 553 A1**
(43) Date of publication of application: **18.02.2026**
(21) Application number: 25192046.8
(22) Date of filing: 28.07.2025
(51) Int. Cl.: B60N 2/16

(54) **DEVICE FOR VERTICALLY ADJUSTING A SEAT OF A VEHICLE, IN PARTICULAR A MOTOR VEHICLE**

(30) Priority: 30.07.2024 IT 202400017728
(71) Applicant: Proma S.p.A., 81020 San Nicola La Strada (CE) (IT)
(72) Inventor: VERDE, Carlo, 80014 GIUGLIANO (NA) (IT)
(74) Representative: Vitillo, Giuseppe

(57) **Abstract**

Device (1) for vertically adjusting a seat of a vehicle, in particular a motor vehicle, comprising: a connecting rod (14) having a first end adapted to be hinged to a floor of the vehicle, and a second end adapted to be hinged to a seat structure (4) of a seat, wherein the connecting rod (14) comprises a first toothed portion (16); an engagement element (18), rotatable relative to the connecting rod (14), having a second toothed portion (19) adapted to engage with the first toothed portion (16) of the connecting rod (14); a cam (15), rotatable relative to the connecting rod (14), configured to abut on the engagement element (18) in order to rotate it; an elastic means (28) for rotating the engagement element (18) towards a lock position, in which the second toothed portion (19) is engaged with the first toothed portion (16); a release mechanism operable by a user in order to rotate the cam (15), wherein a rotation of the cam (15), when driven by the release mechanism, causes a rotation of the engagement element (18) towards a release position, in which the second toothed portion (19) is disengaged from the first toothed portion (16).

## Description

### Technical field

The present invention relates to a system for vertically adjusting a seat of a vehicle, in particular a motor vehicle.

### Technical background

Vehicle seats are notoriously equipped with a system allowing users to adjust the vertical position of the seat as desired, e.g. by acting upon a lever or a push-button that activates an electric motor dedicated to lifting/lowering the seat.

However, such systems suffer from a few drawbacks.

One drawback lies in the fact that known systems are bulky and complex. This problem is particularly felt in sports cars, which need to be equipped with a simple and reliable system.

### Summary of the invention

It is one object of the present invention to provide a device for vertically adjusting a seat of a vehicle which can overcome these and other drawbacks of the prior art.

A further object is to provide an adjustment device that can be manufactured in a simple and economical manner.

According to the present invention, these and other objects are achieved through a device for vertically adjusting a seat of a vehicle having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

### Brief description of the drawings

Further features and advantages of the present invention will become apparent in light of the detailed description that follows, provided merely as a non-limiting example with particular reference to the annexed drawings, wherein:
- Figure 1 is an exploded view of a device in accordance with one embodiment of the present invention;
- Figure 2 is a side view of the device in a lock position;
- Figures 3-5 are side views showing a sequence of the device in a release position;
- Figure 6 is a side view of the device of the invention mounted to a part of the seat structure;
- Figure 7 is an exploded view of the device of the invention mounted to a part of the seat structure;
- Figure 8 is a partially exploded view showing two devices according to the invention to be associated with one seat.

### Detailed description of the invention

With reference to the accompanying drawings, the following will describe a device 1 for vertically adjusting a seat of a vehicle, in particular a motor vehicle, comprising:
- a connecting rod 14 having a first end adapted to be hinged to a floor of the vehicle, and a second end adapted to be hinged to a seat structure 4 of a seat, wherein connecting rod 14 comprises a first toothed portion 16,
- an engagement element 18, rotatable relative to connecting rod 14, having a second toothed portion 19 adapted to engage with first toothed portion 16 of connecting rod 14,

- a cam 15, rotatable relative to connecting rod 14, configured to abut on engagement element 18 in order to rotate it,
- an elastic means 28 for rotating engagement element 18 towards a lock position, in which second toothed portion 19 is engaged with first toothed portion 16,
- a release mechanism operable by a user in order to rotate cam 15, wherein a rotation of cam 15, when driven by the release mechanism, causes a rotation of engagement element 18 towards a release position, in which second toothed portion 19 is disengaged from first toothed portion 16.

Preferably, the release mechanism comprises a cable 3, in particular a Bowden cable. However, according to some possible variants, other release mechanisms may alternatively be used; for example, the release mechanism may include a linkage system or a gear mechanism. The release mechanism is configured to be operated manually by the user and to rotate cam 15 in order to cause cam 15 to rotate engagement element 18 towards the release position. In particular, the release mechanism is purely mechanical, and does not include any (electric or hydraulic) actuator or motor.

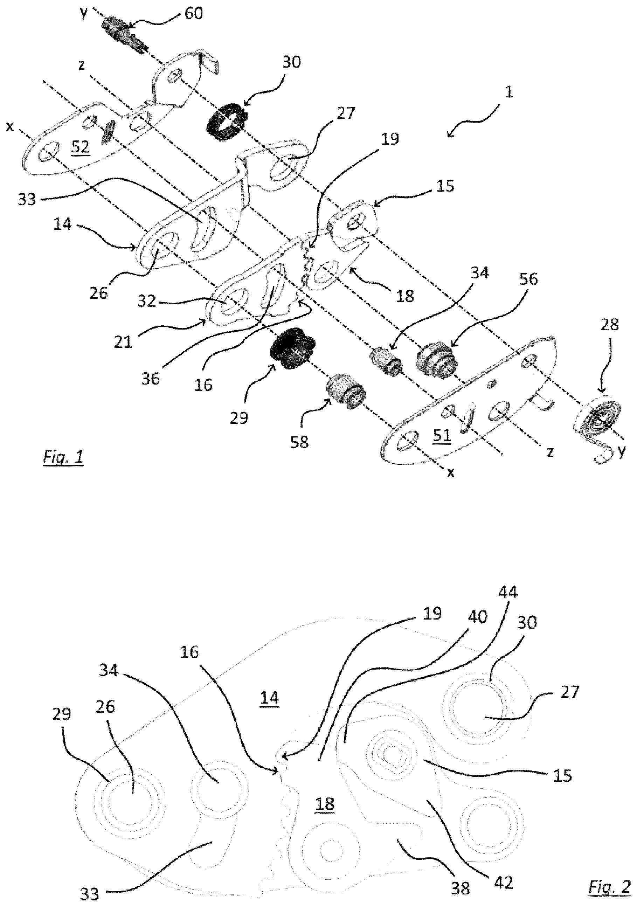

In particular, elastic means 28 is configured to cause a rotation of engagement element 18 in a first direction of rotation, and cam 15, when driven by the release mechanism, is configured to cause a rotation of engagement element 18 in a second direction of rotation. In the example shown in Fig. 1, the first direction of rotation is counterclockwise, and the second direction of rotation is clockwise. In the example, cam 15 is configured to, when driven by the release mechanism, rotate in the same direction of rotation as engagement element 18, which in the particular example shown in Fig. 1 is clockwise.

Preferably, elastic means 28 is a spring, in particular a rotational spring. In particular, elastic means 28 acts upon cam 15 in order to rotate it. The rotation of cam 15 induced by elastic means 28 causes engagement element 18 to rotate towards the lock position. With reference to Figures 2-5, elastic means 28 is adapted to rotate cam 15 counterclockwise. According to some possible variants, elastic means 28 acts directly upon engagement element 18.

First toothed portion 16 is integral with connecting rod 14. First toothed portion 16 may be made as one piece with connecting rod 14, or else it may be fastened to connecting rod 14. In the present embodiment, first toothed portion 16 belongs to a support member 21, and said support member 21 is fixed to connecting rod 14, e.g. by welding. In particular, first toothed portion 16 is a toothed circular sector.

In the example, the first end of connecting rod 14 is configured to rotate about a first axis of rotation x-x. Therefore, when connecting rod 14 is hinged to the vehicle, it can rotate about first axis of rotation x-x.

In particular, cam 15 and engagement element 18 are configured to rotate about axes of rotation that are parallel to each other. In particular, cam 15 is rotatable about a second axis of rotation y-y. In the example, engagement element 18 is rotatable about a third axis of rotation z-z. Axes y-y and z-z are parallel to each other.

In particular, first x-x, second y-y, and third z-z axes of rotation are parallel to and distinct from one another. For example, such axes of rotation x-x, y-y, z-z are horizontal when device 1 is mounted in a horizontally disposed vehicle. In particular, the mutual positions of axes of rotation x-x, y-y, z-z remain fixed.

As shown in the particular example illustrated in the drawings, the second end of connecting rod 14 is configured to be hinged in such a way as to be able to rotate about an axis of rotation other than axes y-y and z-z. In particular, the second end of connecting rod 14 can, as it rotates about first axis of rotation x-x, vary the distance from axes y-y e z-z.

In particular, first and second holes 26, 27 are provided at the first and second ends of connecting rod 14, thus allowing for rotatable installation of connecting rod 14. Preferably, two bushings 29, 30 are inserted in respective holes 26, 27 to improve the hinging of connecting rod 14 to the respective components to which it is intended to be mounted. In this particular example, support element 21 also has a hole 32 which is coaxial to hole 26, and which, in particular, is crossed by bushing 29.

Preferably, device 1 has a stroke limiter mechanism for limiting the stroke of the seat as the seat is raised or lifted by means of device 1. In particular, connecting rod 14 comprises a slot 33 slidably crossed by a pin 34, wherein pin 34 is intended to be mounted integrally with the vehicle, in particular with the floor of the vehicle in which the seat is installed. Pin 34 can slide along slot 33. Slot 33 has two extremities that delimit a stroke of pin 34. The limits of the stroke of pin 34 determine the maximum drop and elevation of the seat. In this particular example, support element 21 also has a slot 36 corresponding to slot 33 of connecting rod 14, in which pin 34 is slidably housed.

In particular, with reference to Fig. 2, engagement element 18 is a rocker arm with a first and a second protrusion 38, 40, which are preferably arranged in an L-shaped pattern. On the second protrusion 40 there is the second toothed portion 19.

In particular, cam 15 has a third protrusion 42 configured to abut on first protrusion 38 of engagement element 18 in order to rotate said engagement element 18 towards the release position.

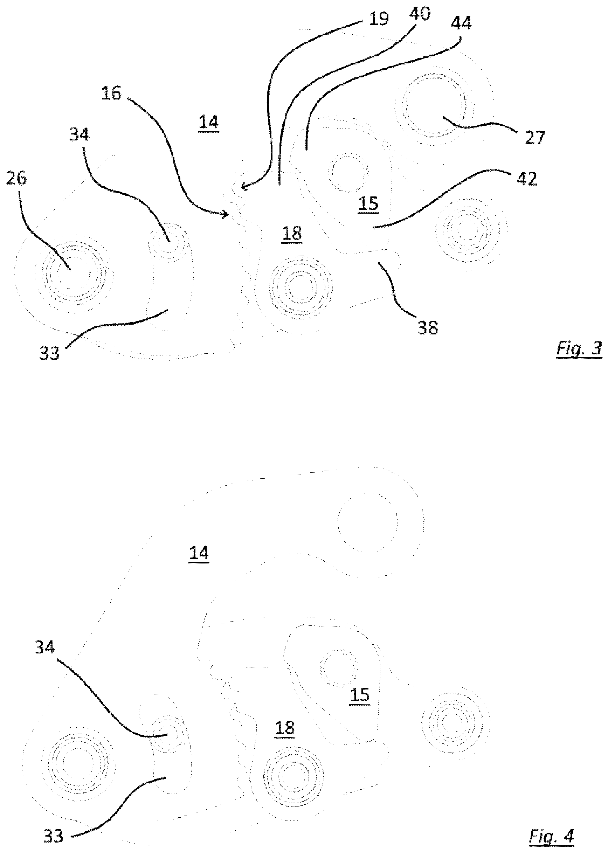

Preferably, cam 15 has a fourth protrusion 44 configured to abut on second protrusion 40 of engagement element 18 in order to keep toothed portions 16, 19 mutually engaged. In particular, cam 15 and engagement element 18 are configured as follows: when fourth protrusion 44 is in abutment with second protrusion 40 and is keeping toothed portions 16, 19 in mutual engagement, third protrusion 42 is not in abutment with first protrusion 38 (e.g. as shown in Fig. 2); when third protrusion 42 is in abutment with first protrusion 38 and toothed portions 16, 19 are mutually disengaged, fourth protrusion 44 is not in abutment with second protrusion 40 (e.g. as shown in Figs. 3-5).

More generally, in the preferred embodiment cam 15 and engagement element 18 are configured in a manner such that engagement element 18 cannot be in the lock position and in the release position simultaneously. In particular, when fourth protrusion 44 is in abutment with second protrusion 40 and is keeping toothed portions 16, 19 in mutual engagement, engagement element 18 is in the lock position (e.g. as shown in Fig. 2); when third protrusion 42 is in abutment with first protrusion 38 and toothed portions 16, 19 are mutually disengaged, engagement element 18 is in the release position (e.g. as shown in Figs. 3-5).

In this non-limiting example, seat structure 4 is a lower portion of the seat, in particular a lower portion of a frame of the seat, whereon the user is intended to sit. In particular, a cushion or a padding (not shown) may be mounted on seat structure 4, whereon the user will sit.

Optionally, the seat comprises a second elastic means configured to cause or facilitate the lifting of seat structure 4. The force exerted by the second elastic means reduces the force that the user is required to apply in order to lift the seat. In particular, the second elastic means is a spring, e.g. a gas spring or a coil spring. For example, the second elastic means may be comprised in device 1, or else it may be comprised in the seat but separate from device 1.

The seat includes a backrest (not shown), the inclination of which can preferably be adjusted by means of a tilt adjustment system (which may be per se known). The backrest is constrained, preferably in a rotatable manner via the tilt adjustment system, to seat structure 4.

Preferably, the front part of seat structure 4 is mounted to a base 2 adapted to be mounted in a fixed position to the vehicle, in particular to a floor of the passenger compartment of the vehicle. In the example, base 2 comprises a bracket 22, to which the front part of seat structure 4 is mounted. In more detail, base 2 comprises a bottom portion 24 adapted to be mounted parallel to the floor of the vehicle. Bottom portion 24 is substantially horizontal. In particular, bottom portion 24 is an elongate element essentially consisting of, for example, a bar. Bracket 22 is substantially perpendicular to bottom portion 24. Optionally, bottom portion 24 may be slidably mounted to the floor of the vehicle, e.g. through a rail system, to allow the user to stop and lock the seat into a plurality of differently advanced positions in the vehicle. In particular, as is per se known, base 2 comprises a pair of bottom portions 24, which are preferably mounted parallel to each other.

In particular, the front part of seat structure 4 is mounted to base 2 through a base rod 46. One end of base rod 46 is hinged to base 2 (in particular, to bracket 22), while another end of base rod 46 is hinged to seat structure 4 (in particular, to a mounting bracket 48 integral with seat structure 4).

The rear part of seat structure 4 is mounted to base 2 through device 1 according to the invention.

Of course, the front part of seat structure 4 (on the left in the drawings) is that part which is closest to the legs of the user or driver. The rear part of seat structure 4 (on the right in the drawings) is that part which is closest to the backrest of the seat.

Preferably, two devices 1 according to the invention are associated with seat structure 4 or seat, mounted on both sides of seat structure 4 or seat, in particular on the right side and on the left side. Therefore, the invention concerns a system for vertically adjusting a seat of a vehicle, in particular a motor vehicle, comprising a pair of devices 1. Devices 1 are intended to be mounted on both sides of seat structure 4, in particular on the right side and on the left side. In particular, such two devices 1 are symmetrical. Preferably, base 2 includes a pair of bottom portions 24, with each one of which a respective device 1 is associated. The details of such devices 1 will not be repeated below for brevity's sake.

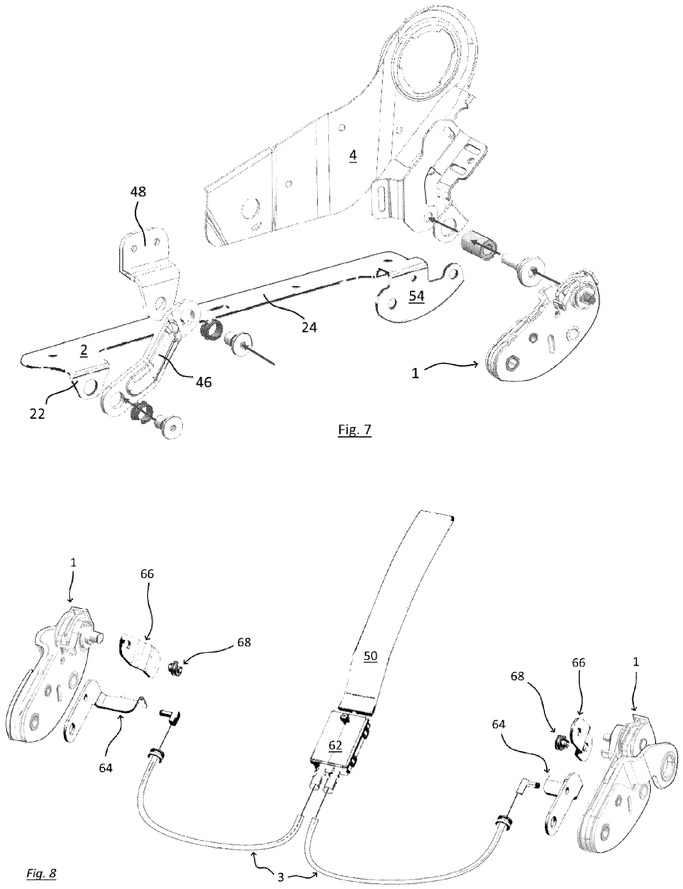

The system preferably comprises a grip portion 50 configured to be gripped by the user in order to operate the two release mechanisms, in particular two cables 3. By pulling grip portion 50, the user operates the release mechanisms, which, in their respective devices 1, will then disengage toothed portions 16, 19. In this case, the user will operate only one grip portion 50. In the example of Fig. 8, grip portion 50 is a belt, but further alternative solutions are also possible, such as a handle or a lever, which are manually operable by the user. In this example, device 1 comprises a transmission mechanism 62 configured to receive a force exerted by the user on grip portion 50 and transform it into a force that drives cables 3. Transmission mechanism 62 is mounted between cables 3 and grip portion 50.

In particular, cam 15 and engagement element 18 are intended to be mounted to base 2 with freedom of rotation. Therefore, their respective axes of rotation y-y and z-z are intended to remain fixed relative to base 2, and hence also to the floor of vehicle, except when the seat is being moved forwards/backwards in the passenger compartment to be set into the desired position.

In the example, device 1 comprises a mounting body for mounting device 1 to the vehicle, in particular to base 2 of the seat. In particular the mounting body includes a first and a second plate 51, 52 configured to be fastened to the vehicle, in particular to base 2. Connecting rod 14 is rotatably mounted to plates 51, 52, in particular around axis x-x, more particularly through bushing 29.

Plates 51, 52 shown herein are substantially flat. In particular, plates 51, 52 substantially form a casing. The mounting body, and particularly the first and second plates 51, 52, are intended to be mounted to base 2 in a fixed position. Therefore, the mounting body, and particularly the first and second plates 51, 52, is intended to be solidly connected to base 2. In particular, base 2 includes a mounting portion 54 to which one of plates 51, 52 is to be mounted.

Preferably, elastic means 28 is mounted to the mounting body, and particularly to first plate 51. Optionally, elastic means 28 is mounted to an external side of the mounting body, particularly to the outside of first plate 51.

In particular, cam 15, engagement element 18 and connecting rod 14 are rotatably mounted to the mounting body, and particularly to plates 51, 52.

In particular, cam 15, engagement element 18 and connecting rod 14 are interposed between plates 51, 52. In the example, support element 21 is also interposed between plates 51, 52.

In the example, plates 51, 52 have holes to receive one or more of pin 34 and a further bushing 56. In the preferred example shown herein, bushing 56 is used to rotatably mount engagement element 18 to plates 51, 52. In particular, a first mounting pin 58 is inserted into bushing 29 to mount the latter to plates 51, 52.

Preferably, a second mounting pin 60 is used to rotatably mount cam 15 to plates 51, 52. In the example, second mounting pin 60 also supports elastic means 28. Optionally, elastic means 28 is mounted to the outside of plates 51, 52.

In general, plates 51, 52 preferably have holes to receive pins or bushings (e.g. 34, 56, 58, 60) for the purpose of mounting the elements associated with such plates 51, 52.

When the user operates the release mechanism, cam 15 rotates engagement element 18 and brings it into the release position, so that the user can lift or lower the seat as desired. Then, when the action upon the release mechanism is stopped, cam 15 is returned by elastic means 28 into the lock position, so that the seat will stay in the chosen position.

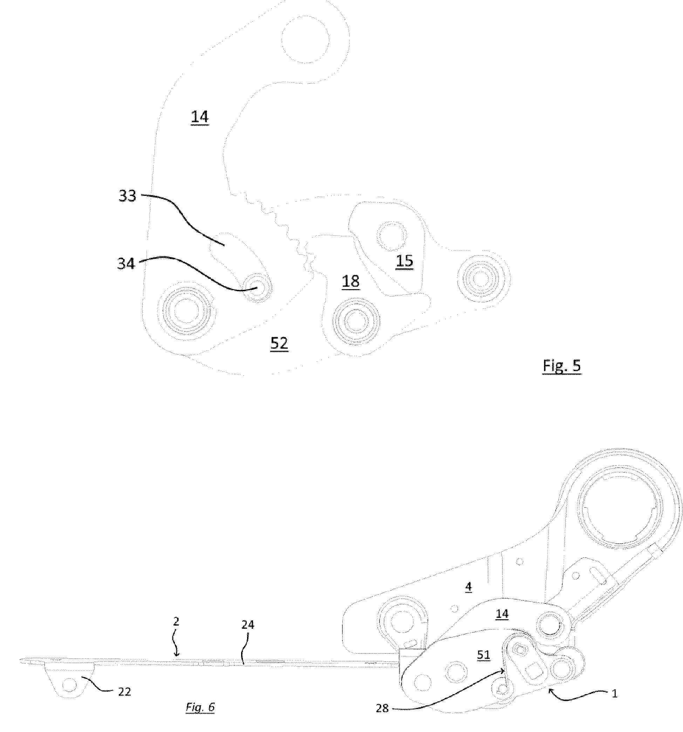

The following will describe the operation of device 1, starting from the condition shown in Fig. 2, in which engagement element 18 is in the lock position with toothed portions 16, 19 mutually engaged, and elastic means 28 is maintaining this condition by acting upon engagement element 18. In this condition, connecting rod 14, and hence the seat, cannot move. The user then operates the release mechanism (in the example, the user pulls cable 3), which overcomes the force of elastic means 28 and causes a clockwise rotation of cam 15 (Fig. 3), and such rotation of cam 15 causes engagement element 18 to rotate clockwise into the release position, where toothed portions 16, 19 are mutually engaged; now the user can lift the seat, which moves connecting rod 14, to which it is connected, as shown in Figures 4, 5, where connecting rod 14 follows the upward movement of the seat (not shown). Once the user has set the seat into the desired position, the user releases the release mechanism, and elastic means 28 returns engagement element 18 (by rotating it counterclockwise, with reference to Figures 2-5) into the lock position, where toothed portions 16, 19 are mutually engaged; now the seat will be locked again (as in Fig. 2) and the user can sit on it.

Preferably, device 1 of the invention is purely mechanical. Therefore, no (electric or hydraulic) motor is used in order to drive device 1. In particular, device 1 can only be operated manually by the user in order to adjust the height of the seat. However, other actuators or motors may be associated with the seat, e.g. for moving the seat forwards/backwards in the vehicle or for tilting the backrest of the seat relative to seat structure 4.

In the example shown in Figure 8, device 1 has a retaining bracket 64 on which a sheath of cable 3 abuts. Moreover, it 1 has a release rod 66, which is acted upon by cable 3, and which is configured to rotate engagement element 18 towards the release position. In the example there is a bushing 68 for securing one end of cable 3 to retaining bracket 64.

The present invention advantageously provides a simple and economical lifting mechanism, allowing for simple and fast adjustment by the user.

The invention also concerns a seat for a vehicle, in particular for a motor vehicle (e.g. a sports car), having a device 1 or a system according to any variant of the invention. The invention also concerns a vehicle, in particular a motor vehicle, having such device 1 or system.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Device (1) for vertically adjusting a seat of a vehicle, in particular a motor vehicle, comprising:
- a connecting rod (14) having a first end adapted to be hinged to a floor of the vehicle, and a second end adapted to be hinged to a seat structure (4) of a seat, wherein the connecting rod (14) comprises a first toothed portion (16),
- an engagement element (18), rotatable relative to the connecting rod (14), having a second toothed portion (19) adapted to engage with the first toothed portion (16) of the connecting rod (14),
- a cam (15), rotatable relative to the connecting rod (14), configured to abut on the engagement element (18) in order to rotate it,
- an elastic means (28) for rotating the engagement element (18) towards a lock position, in which the second toothed portion (19) is engaged with the first toothed portion (16),
- a release mechanism operable by a user in order to rotate the cam (15), wherein a rotation of the cam (15), when driven by the release mechanism, causes a rotation of the engagement element (18) towards a release position, in which the second toothed portion (19) is disengaged from the first toothed portion (16).

2. Device according to claim 1, wherein the elastic means (28) is configured to cause a rotation of the engagement element (18) in a first direction of rotation, and the cam (15), when driven by the release mechanism, is configured to cause a rotation of the engagement element (18) in a second direction of rotation.

3. Device according to claim 1 or 2, wherein the engagement element (18) is a rocker arm with a first and a second protrusion (38, 40), and the second toothed portion (19) is formed on the second protrusion (40);
wherein the cam (15) has: a third protrusion (42) configured to abut on the first protrusion (38) of the engagement element (18) in order to rotate said engagement element (18) towards the release position, and a fourth protrusion (44) configured to abut on the second protrusion (40) of the engagement element (18) in order to keep the toothed portions (16, 19) in mutual engagement.

4. Device according to claim 3, wherein the cam (15) and the engagement element (18) are configured in such a way that:
when the fourth protrusion (44) is in abutment with the second protrusion (40) and is keeping the toothed portions (16, 19) in mutual engagement, the engagement element (18) is in the lock position;
when the third protrusion (42) is in abutment with the first protrusion (38) and the toothed portions (16, 19) are mutually disengaged, the engagement element (18) is in the release position.

5. Device according to any one of the preceding claims, wherein the first end of the connecting rod (14) is configured to rotate about a first axis of rotation (x-x), the cam (15) is rotatable about a second axis of rotation (y-y), and the engagement element (18) is rotatable about a third axis of rotation (z-z), wherein the first (x-x), second (y-y) and third (z-z) axes of rotation are parallel to and distinct from one another.

6. Device according to claim 5, wherein the relative positions of the axes of rotation (x-x, y-y, z-z) remain fixed.

7. Device according to any one of the preceding claims, comprising a mounting body for mounting the device (1) to the vehicle, and the mounting body includes a first and a second plate (51, 52) configured to be fastened to the vehicle, wherein the connecting rod (14) is rotatably mounted to the plates (51, 52).

8. Device according to claim 7, wherein the cam (15), the engagement element (18) and the connecting rod (14) are interposed between the plates (51, 52).

9. Device according to any one of the preceding claims, comprising a stroke limiter mechanism for limiting the stroke of the seat when the seat is raised or lifted by means of the device (1), wherein the connecting rod (14) comprises a slot (33) through which a pin (34) is slidably inserted, wherein the pin (34) is intended to be integrally mounted to the vehicle, wherein the pin (34) can slide along the slot (33); the slot (33) has two extremities delimiting a stroke of the pin (34).

10. Device according to any one of the preceding claims, wherein the elastic means (28) acts upon the cam (15) in order to rotate it, and a rotation of the cam (15) induced by the elastic means (28) causes a rotation of the engagement element (18) towards the lock position.

11. Device according to any one of the preceding claims, wherein the release mechanism comprises a cable (3).

12. System for vertically adjusting a seat of a vehicle, in particular a motor vehicle, comprising a pair of devices (1) according to any one of the preceding claims, such devices (1) being intended to be mounted on two sides of the seat structure (4), and a grip portion (50) configured to be gripped by the user in order to operate both release mechanisms.

13. System according to claim 12, wherein each one of the two release mechanisms comprises a cable (3), and the grip portion (50) is configured to operate both cables (3).

14. Seat for a vehicle, in particular a motor vehicle, having a device (1) or a system according to any one of the preceding claims.
